(19) **Europäisches Patentamt**

**European Patent Office**

**Office européen des brevets**

(11) **EP 0 834 151 B1**

(12) # EUROPEAN PATENT SPECIFICATION

(45) Date of publication and mention
of the grant of the patent:
**16.02.2000 Bulletin 2000/07**

(21) Application number: **96916708.9**

(22) Date of filing: **29.05.1996**

(51) Int Cl.⁷: $G06K\ 9/64$, $G06T\ 7/00$

(86) International application number:
**PCT/US96/07859**

(87) International publication number:
**WO 96/39678 (12.12.1996 Gazette 1996/54)**

(54) **OBJECT RECOGNITION METHOD**

VERFAHREN ZUM ERKENNEN VON GEGENSTÄNDEN

PROCEDE DE RECONNAISSANCE D'OBJET

(84) Designated Contracting States:
**AT BE CH DE DK ES FR GB GR IT LI NL SE**

(30) Priority: **05.06.1995 US 462352**

(43) Date of publication of application:
**08.04.1998 Bulletin 1998/15**

(73) Proprietor: **SHELL OIL COMPANY**
**Houston, Texas 77252-2463 (US)**

(72) Inventor: **BEATTY, David, Andrew**
**Burnaby, British Columbia V3N 4S6 (CA)**

(74) Representative: **Leeming, John Gerard et al**
**J.A. Kemp & Co.,**
**14 South Square,**
**Gray's Inn**
**London WC1R 5LX (GB)**

(56) References cited:
**US-A- 4 658 246**

- **IEICE TRANSACTIONS, vol. E74, no. 6, 1 June 1991, pages 1728-1734, XP000262328 MASAKI I: "INDUSTRIAL VISION SYSTEMS BASED ON APPLICATION-SPECIFIC IC CHIPS"**
- **COMPUTER VISION, GRAPHICS AND IMAGE PROCESSING, vol. 27, no. 1, July 1984, MA US, pages 97-114, XP002012880 FRANK P. KUHL: "Global Shape Recognition of 3-D Objects Using a Differential Library Storage"**

**Description**

Technical Field

This invention relates to a method for identifying the location and orientation of a known article within a visual field.

Background Art

U.S. Pat. No. 5,379,353 suggests a differential analysis circuit that utilizes a step to identify edge vectors for identification of such things as a road for a mobile robot. A digital image captured from a video camera is processed using an algorithm that includes generation of a differential of brightness along each row of pixels, and presumably also along each column of pixels. The absolute value of the differential brightness represents a change in the picture, and a differential that exceeds a threshold is identified as a possible edge to a road.

U.S. Pat. No. 5,381,155 suggests a speed detection system that identifies moving vehicles in the view of a fixed camera, measures the speed at which the vehicles are moving, and identifies a license plate number from the vehicle. Commercially available systems are disclosed that are said to be capable of identifying the license plate within a captured image and then reads the numbers and letters within the license plate number.

U.S. Pat. No. 5,381,489 suggests a system for recognition of characters on a medium. This system includes making a window of a possible character from the medium, and then comparing that window to each template within a set. The entire set of templates must be screened each time a character is identified. The templates are generated based on previously recognized characters from the document where the initial recognition requires a more rigorous comparison to different character features.

A problem faced in visual recognition is to recognize the location, within the view of a camera, and the orientation, of a particular article where the article may be one of a relatively few possible articles already identified from a library of potential articles. The possibility of a variety of lighting conditions and shadows make such recognition difficult. There are also typically constraints on the amount of computer data storage available at the site of a desired visual recognition facility. Therefore, templates of different orientations an scales of the different articles can generally not be generated and stored initially.

Such a problem in visual recognition is encountered when visual recognition is used as a means to identify vehicles or determine the orientation of vehicles in an automated refuelling system. For example, in U.S. Pat. No. 3,527,268 it is suggested that vehicle identification in an automated refuelling system can be achieved in a fully automated method by a photo-electric means to detect the silhouette of the automobile. How this is to be done is not suggested.

It is therefore an object of the present invention to provide a method to identifying the location and orientation of an article, wherein the method is capable of identifying the location and orientation of the article in a variety of natural and artificial lighting conditions, and wherein a large number of templates do not have to be digitally stored.

"Industrial Vision Systems Based on Application Specific IC Chips" IEICE Transactions Vol E74 No6 pp 1728-1734 discloses a method for identifying the location and orientation of an article by matching an edge image of the article in unknown position and orientation with a plurality of templates representing in different known orientations and positions.

These and other objects of the invention are accomplished by a method to identify the location and orientation of an article, the method comprising the steps of: obtaining an image of the article with the article having a known orientation and location relative to a camera; creating a X and Y template edge matrix from the image of the article; creating a plurality of sets of modified template edge matrices, each of the sets of modified template edge matrices being a X and Y template edge matrix with the article in a different orientation; capturing an digital visual image containing the article, the digital image being a matrix of pixels; creating X and Y article edge matrices from the matrix of pixels; quantifying difference between each of the sets of modified template edge matrices and the X and Y article edge matrices with the modified template edge matrices placed at a plurality of locations within the bounds of the article edge matrices; and identifying the location and orientation of the article as the orientation of the article represented by the set of modified template edge matrices at the location within the bounds of the X and Y article edge matrices with the minimal quantified differences between the modified template edge matrices and the X and Y article edge matrices.

This method can be readily adapted to identification of a location and orientation of a vehicle within a bay for automated refuelling purposes. The make and model of the vehicle can be identified by another means, such as for example, driver manual input, a magnetic or optical strip, or a passive or active transponder located on the vehicle. With the make and model identified, or limited to one of a small number of possibilities (such as when more than one transponder signal is being received), base templates can be retrieved from storage. The base templates can be prepared from a digital visual image of the known make and model of vehicle with the vehicle positioned at a known location with respect to the camera, and the image processed by generation of X and Y edge matrices. After the make and model of the vehicle are identified, a series of modified templates are created from the retrieved templates by rotation of the template edge matrices to different angles from the initial orientation and/or scaling the matrices to represent different distances from the camera. Thus, only one set of base templates (or one set of X and Y edge matrix templates) needs to be stored in the data base for each vehicle. A captured visual image containing the vehicle within the refuelling facility can then be processed to generate article edge matrices, and compared to the modified templates, with each modified template being compared to the article edge matrices at different locations within the article edge matrices.

Preferably, a mask of the template is prepared so that only the outlines and/or internal edges of the article, and not the surrounding area, is compared to the actual article edge matrices. The mask also provides expected dimensions of the article so that only locations within the article edge matrices within which the article would fit would be searched for the article, and the article can be identified with a position relatively close to the edge of the view.

Separately comparing the X and Y edge template matrices with the article X and Y edge matrices significantly improves the robustness of the method, and results in reliable fits being found quickly in a variety of light conditions, with partial obstruction of the view of the article, and with partial masking by dirt, leaves, grass, and other articles that may be present in a relatively uncontrolled environment.

Detailed Description of the Invention

A camera is typically used in the practice of the present invention to capture a visual image of an article in a known position and orientation. A digital image can be captured using one of the commercially available framegrabber hardware and associated software packages. The digital image is a matrix of pixels, each of the pixels having a number that corresponds linearly to a brightness. A color image can be utilized, in which case the image is represented by three matrices, one each for red, green and blue. Typically, the images of about 256 by 240 pixels are preferred for the practice of the present invention because such a number of pixels results in sufficient resolution and is within the capacity of relatively inexpensive video cameras. The video camera may generate an image of about twice the resolution of a 256 by 240 matrix, in which case the image can be reduced by averaging adjacent pixels to create a matrix of pixels having one half the height and one half the width by averaging blocks of four pixels.

Signal to noise ratios can be increased by averaging two or more consecutive images.

Edge matrices may be generated from both the images containing the article in a known location and orientation relative to the camera, and the images containing the article within which the location and orientation of the articles are to be determined, by applying operators such as the following:

$$\frac{1}{8}\begin{bmatrix} 1 & 2 & 1 \\ 0 & 0 & 0 \\ -1 & -2 & -1 \end{bmatrix}$$

and;

$$\frac{1}{8}\begin{bmatrix} 1 & 0 & -1 \\ 2 & 0 & -2 \\ 1 & 0 & -1 \end{bmatrix}$$

As can be seen from these operators, they each result in a matrix in which the elements will sum to zero. The absolute values of the elements of the resulting matrices indicate the change in brightness along the x and y axis respectively. The use of edge magnitudes helps make the appearance invariant to direction of light and color of the object. Producing these edge matrices therefore results in images that can be compared with templates inspite of significant differences in lighting or color of the article (although color could be identified as well in the practice of the present invention). The results of these two operators can be summed to obtain one edge vector matrix, but in the practice of the present invention, it is significant that the two are not combined for comparison. Not combining the two greatly increases the robustness of the algorithm, i.e. the ability of the algorithm to identify outlines when the articles are masked with dirt, partially obscured, or subjected to varying light conditions.

A mask is preferably place over the image of the edge matrices of the article with the know location and orientation so that only the know outlines of the article are considered. The masked regions can be referred to as "don't care" regions, because edge data in these regions will be ignored when fitting the edge matrices of the article in the known position to the edge matrices of the article within which the location and orientation of the article is to be identified.

The dimensions of the mask can also define limits of the locations within the image containing the article that could contain an image of the article. For example, if the mask were fifty pixels by fifty pixels within an image of 256 pixels by 240 pixels, then only locations within the middle 206 by 190 pixels could be the center of the mask, if the entire article is within the image.

When a color image is used, edge matrices are preferably generated for each color, and then the three edge matrices are preferably combined to form one X or Y edge matrix. This combination can be by summing the absolute values of the three edge matrices (and dividing the sum by three), by selecting the maximum value of the edge matrix among the three, by calculating an average, or by taking the square root of the sum of the squares of corresponding elements of the edge matrices. It may also be possible to consider two of the three colors in, for example, one of the preceding ways. The use of a color image improves the fit to a template by providing that more edge information is extracted from an image. For example, an edge image at an interface between colors can be identified even if the interface is between surfaces having similar brightness. Use of color images increases the cost of the camera, and the increases amount of data processing required to take advantage of having three sets of images, but is preferred if the difficulty of the application warrants the additional expense.

The image of the article may be reduced by, for example averaging adjacent pixels. An image is therefore created that contains fewer pixels for comparison of the modified templates to the article edge matrices for finding an initial position and orientation estimate. For example, a matrix of 256 by 240 pixels could be reduced to a matrix of 64 by 60 pixels by two successive averaging and subsampling operations. Comparisons of the reduced matrices can be accomplished much more quickly, and then the fit of the reduced matrices can be used as a starting point for finding a fit for the larger matrices. Generally, only locations within a few (one to three) pixels of the pixels averaged into the best fit result of the reduced matrix need to be compared at higher levels of resolution.

Reducing the matrices can significantly reduce computing time required to compare the template edge matrices with the article edge matrices. Two reductions, each being two for one linear reductions, are recommended. Thus, each reduction therefore reduces the amount of information to be considered by a factor of four. The combined reductions reduce the amount of information by a factor of sixteen. Further, each of the parameters for which templates are prepared are of lower resolution, resulting in fewer sets of rotated templates, and at fewer locations within the view of the article edge matrix. Initial searches within the reduced matrixes can therefore be performed in two or three orders of magnitude less time than if the article edge matrix was searched at the original level.

When the article which the image is to be searched for is know, a template of that article, preferably as two edge matrices with a mask, can be selected from a data base. The template can then be modified to represent the article in a plurality of orientations. By orientations, it is meant that the two dimensional image of the article is rotated about the axis of the view of the camera, rotated to an angled view of the object, and/or scaled to represent changes in distance from the camera. Increments of, for example, two to three degrees of rotation can be used to obtain a sufficient number of orientations that one should have a clearly best fit for the article in an particular orientation.

For an application such as an overhead camera identifying a vehicle's position within a bay of an automated refuelling system, an expected orientation can be predicted (most drivers drive in relatively straight), and it can be also predicted that the actual orientation will not be more than a certain variation (for example, plus or minus twenty degrees) from the expected orientation. Thus, only a limited number of modified template edge matrices need to be created. But creating these modified templates after the vehicle make and model have been identified considerably reduces the amount of computer storage needed to store template matrices.

Rotation of the template matrices about an axis essentially normal to a plane of the two dimensional view of the video camera (or "transforming" the image to the new orientation) is readily accomplished by well known methods. Such transformations are preferably performed by calculating the point within the original matrix of pixels each pixel within the transformed matrix would lie so that the four pixels of the original matrix surrounding the center of the pixel from the transformed matrix can be used to interpolate a value for the pixel of the transformed matrix. Again, methods to accomplish these interpolations are well known.

The templates could also be created with the image scaled to represent the article located at different distances from the camera. This scaling is accomplished by changing the dimensions from a center point of the camera view inversely proportional with the distance from the camera. This scaling is preferably performed based on distances from an effective pinhole, where the effective pinhole is defined as a point through which a perspective projection is made by the camera. This effective pinhole would therefore be slightly behind the lens of the camera.

A more difficult problem is to identify a location and orientation of a known article or outline when viewed at an angle significantly different from normal to a plane containing the article or outline. For example, a camera located on a refuelling apparatus may need to locate a gasoline nozzle cover lid from an position that does not allow viewing of the cover lid with the camera facing perpendicular to the plane of the cover lid. A rectangular lid cover would therefore not appear to the camera to be rectangular. The distortion from a rectangular shape would depend upon both the angle and the relative position of the lid with respect to the centerline of the camera's view (known as the optical axis).

Geometric distortion can be eliminated from images that are not normal to the optical axis if the article of the image can be approximated by a planar image. If the angle of the optical axis from perpendicular of the planar image of the article is known (i.e., the image to be searched for the article), geometric distortion can be removed, and images obtained that represent a transformation to perpendicular views of the article in the image to be searched. Likewise, if the templates are created wherein the optical axis is not perpendicular to the plane of the template, geometric distortion can be removed from the templates by such a transformation. If the angle from normal to the optical axis is not known for the image to be searched, this angle can be another search parameter.

Such transformation to a perpendicular view is simplified by the fact that the transformation is the same for a given angle between the optical axis and the normal of the plane approximately containing the article, regardless of the displacement between the camera and the plane, provided that the target remains in the limits of the view of the camera.

The preferred transformation method in the practice of the present invention, rather than to place a pixel from an article image matrix within a transformed image, will take a pixel location from the transformed matrix and calculate the location of that pixel within the article image matrix. An interpolation is then performed using four pixel values of the article image matrix surrounding the position of the inversely transformed matrix pixel to determine the value of the pixel in the transformed image. The following equations provide the location of a pixel from the transformed image on the article image, for the case of the article plane normal being perpendicular to the image X axis:

$$\rho_x = \frac{\sigma_x \left( \frac{P_o'}{P_o} \right)}{b + a \left( \frac{P_{zc}}{P_o} \right) - a \left( \frac{P_o'}{P_o} \right) \sigma_y} \qquad (3)$$

and:

$$\rho_y = \frac{a - b \left( \frac{P_{zc}}{P_o} \right) + b \left( \frac{P_o'}{P_o} \right) \sigma_y}{b + a \left( \frac{P_{zc}}{P_o} \right) - a \left( \frac{P_o'}{P_o} \right) \sigma_y} \qquad (4)$$

where:

$$a = \sin(\theta) \qquad (5)$$

and:

$$b = \cos(\theta) \qquad (6)$$

and:

$\rho_x$ is the ratio of actual article image plane x position to $P_o$,
$\rho_y$ is the ratio of actual article image plane y position to $P_o$,
$P_o$ is the perpendicular distance from the effective pinhole to the actual article,
$P_o'$ is the distance from the plane of the transformed image to the effective pinhole,
$P_{zc}$ is the vertical displacement of the camera of the transformed image relative to the camera position in the actual image,

$\sigma_y$ is the y coordinate value in the transformed image,
$\sigma_x$ is the w coordinate value in the transformed image, and
$\theta$ is the downward pitch angle of the plane normal to the camera.

For $\theta$ of up to about fifty degrees, the following ratios can be used to fit a good portion of the original image into the transformed image:

$$\left(\frac{P_o'}{P_o}\right) = [\,(b+a\rho_{yl})\,(b-a\rho_{yl})\,]^{-1} \qquad (7)$$

and

$$\left(\frac{P_{zc}}{P_o}\right) = \frac{ab\,(1+\rho_{yl}^2)}{(b+a\rho_{yl})\,(b-a\rho_{yl})} \qquad (8)$$

where $\rho_{yl}$ is half of the vertical height of the original image.

Although modified templates can be created with rotations and changes in distances from the camera, a plurality of such rotations and changes could result in an exceedingly large number of modified templates. It is therefore preferred that searches are carried out over one variable out of the possible rotating, scaling, and angled views in the practice of the present invention.

If the orientation of the article with respect to rotation within a plane perpendicular to the camera view is expected to be within about twenty degrees of the orientation of the article having the known orientation, the template X and Y edge images may be simply individually rotated to form the modified edge template images prior to comparing the modified template edge images to the article edge images. When more than about twenty degrees of rotation is possible, a new set of edge images is preferably created based on a combination of the original edge images. The X and the Y edge image values together represent an edge vector having an angle (arctan(Y/X)) and a magnitude ($(X^2+Y^2)^{1/2}$). This angle may be rotated by the angle of rotation of the template and new X and Y components calculated. Typically, only the absolute values of the X and Y components are stored, and therefore edge vectors in the first or third quadrant must be differentiated from edge vectors of the second or fourth quadrant. Edge vectors in the third and fourth quadrants could be considered as their negative vectors in the first and second quadrants respectively, and therefore just two quadrants of vectors need be identified. Quadrants of edge vectors can be identified with a single additional binary template generated from the original template image, the binary template having pixels representing whether the edge magnitude vector at that point represents an edge whose direction vector is in the first or third quadrant, or the second or fourth quadrant. This template can be automatically generated from the template image. This requires very little additional storage space, and can be used during a rotation operation to adjust the X and Y edge magnitude weights to their exact proper proportion at very little extra computational cost. Rotation of the edge matrices by any amount of rotation can thereby be made completely valid.

The following equation is convenient for the purpose of quantifying the differences between the modified template edge matrices and the article edge matrices because commercially available image processing cards are available to quickly generate the comparisons:

$$\rho(x,y) = \frac{\sum_{ij} X_{ij} X'_{(x+i)(y+j)} + \sum_{ij} Y_{ij} Y'_{(x+i)(y+j)}}{\sqrt{\sum_{ij}(X_{ij})^2 + \sum_{ij}(Y_{ij})^2}\,\sqrt{\sum_{ij}(X'_{(x+i)(y+j)})^2 + \sum_{ij}(Y'_{(x+i)(y+j)})^2}} \qquad (9)$$

where

X is a X template edge matrix of i by j pixels rotated to an orientation to be tested against a portion of the image matrix,

Y is a Y template edge matrix of i by j pixels rotated to an orientation to be tested against a portion of the image matrix,

X' is a portion of an image X edge matrix of i by j pixels located at a position of coordinates x,y on the X image edge vector matrix,

Y' is a portion of an image Y edge matrix of i by j pixels located at a position of coordinates x,y on the Y image edge vector matrix, and

$\rho(x,y)$ is a grey scale edge correlation normalized for point (x,y).

The grey scale edge correlation will be a number between zero and one, with one being a perfect match. Grey scale correlations are performed for each x and y within the article edge matrix for which the entire modified template edge matrix can fit within the article edge matrix. The resulting grey scale correlation that is the closest to approach unity is the closest fit. Interpolation between variables can be achieved using linear or squared weighing above a noise threshold. Such variables may be, for example, angle of rotation, or x and y locations.

Portions of the calculations to generate these grey scale edge matrices can be quickly made using a GPB-1 auxiliary card-AlignCard.

"Don't care" regions may also fall within the boundaries of the i by j dimensioned matrices of the modified template edge matrix. Pixels in the template identified as "don't care" are preferably not used in the summations of the terms of Equation 9.

Because the grey scale edge matrix correlation result is very sensitive to relative displacement of an object's template and test image, a smoothing operation may be performed prior to comparison of the two. Although reducing the matrices as described above has a smoothing effect, a further smoothing operation may also be included. This smoothing operation may be performed on each before the correlation is calculated, but after the subsampling to a current search level. A preferred smoothing operation is a Gaussian approximation, given by the following convolution kernel:

$$\frac{1}{8}\begin{bmatrix} 0 & 1 & 0 \\ 1 & 4 & 1 \\ 0 & 1 & 0 \end{bmatrix} \qquad (10)$$

When this smoothing is applied, it is preferably applied to both the article edge matrix and the modified template edge matrix.

A preferred application of the method of the present invention is an automated refuelling methods disclosed in U.S. Pat. Appl. Nos. 461,280 (Docket No. TH0622), 461,281 (Docket No. TH0572), and 461,276 (Docket No. TH0573).

The embodiments described above are exemplary, and reference is made to the following claims to determine the scope of the present invention.

## Claims

1. A method to identify the location and orientation of an article, the method comprising the steps of:

    obtaining an image of the article with the article having a known orientation and location relative to a camera; characterised by:
    creating template X- and Y- edge matrices from the image image of the article;
    creating a plurality of sets of modified template edge matrices, each of the sets of modified template matrices comprising template X- and Y- edge matrices with the article in a different orientation;
    capturing an digital visual image containing the article, the digital image being a matrix of pixels;
    quantifying difference between each of the sets of modified template edge matrices and the article X- and Y- edge matrices with the modified template edge matrices placed at a plurality of locations within the bounds of the article edge matrices; and
    identifying the location and orientation of the article as the orientation of the article represented by the set of modified template edge matrices at the location within the bounds of the article X- and Y- edge matrices with the minimal quantified differences between the modified template edge matrices and the article X- and Y- edge matrices.

2. The method of Claim 1 further comprising the steps of

   smoothing the modified template edge matrices and the article edge matrices by averaging adjacent pixels and subsampling to obtain reduced matrices with a reduced number of pixels;

   quantifying the difference between each of the reduced modified template edge matrices and the reduced article edge matrices with the modified template edge matrices placed at a plurality of locations within the bounds of the article edge matrices; and

   quantifying the difference between each of the sets of modified template edge matrices and the article X- and Y- edge matrices with the modified template edge matrices placed at a plurality of locations within the bounds of the article edge matrices only for locations within a predetermined distance of the location and the orientation having minimum differences between the reduced matrices.

3. The method of Claim 1 wherein the edge matrices are obtained by applying to the image to obtain horizontal and vertical edge matrices respectively the operators:

$$\frac{1}{8}\begin{bmatrix} 1 & 2 & 1 \\ 0 & 0 & 0 \\ -1 & -2 & -1 \end{bmatrix}$$

and;

$$\frac{1}{8}\begin{bmatrix} 1 & 0 & -1 \\ 2 & 0 & -2 \\ 1 & 0 & -1 \end{bmatrix}$$

4. The method of Claim 1 wherein a plurality of modified template edge matrices are created with the template edge matrix scaled to represent different distances from the camera.

5. The method of Claim 1 wherein a plurality of modified template edge matrices are created with the template edge matrix transformed to represent different angles from normal to the optical axis.

6. The method of Claim 1 wherein portions of the template edge matrices outside of outlines of the article are ignored when quantifying the difference between each of the modified template edge matrices and the article edge matrices.

7. The method of Claim 1 wherein the plurality of locations is every contiguous set of pixels within the article edge matrices within which a modified template edge matrix will fit.

8. The method of Claim 2 wherein the plurality of locations for which the difference between each of the reduced modified template edge matrices and the reduced article edge matrices are quantified include every contiguous set of pixels within the reduced modified template edge matrices will fit.

9. The method of Claim 1 wherein a color image is obtained, and single color edge matrices are created for more than one color, and then combined to obtain the template edge matrices.

10. The method of Claim 9 wherein three set of single color edge matrices are created.

11. The method of Claim 2 wherein edge matrices are obtained by applying to the image to obtain vertical and horizontal edge matrices respectively the operators:

$$\frac{1}{8}\begin{bmatrix} 1 & 2 & 1 \\ 0 & 0 & 0 \\ -1 & -2 & -1 \end{bmatrix}$$

and;

$$\frac{1}{8}\begin{bmatrix} 1 & 0 & -1 \\ 2 & 0 & -2 \\ 1 & 0 & -1 \end{bmatrix}$$

12. The method of Claim 11 wherein portions of the template edge matrices outside of outlines of the article are ignored when quantifying the difference between each of the modified template edge matrices and the article edge matrices.

13. The method of Claim 12 wherein the plurality of locations comprises every contiguous set of pixels within the matrix of pixels within which a modified template edge matrix will fit.

14. The method of Claim 12 wherein the plurality of locations for which the difference between each of the reduced modified template edge matrices and the reduced article edge matrices are quantified comprise every contiguous set of pixels within which the reduced modified template edge matrices will fit.

15. The method of Claim 14 wherein a color image is obtained, and single color edge matrices are created for more than one color, and then combined to obtain the template edge matrix.

16. The method of Claim 15 wherein three sets of single color edge matrices are created and then combined to obtain the template edge matrix.

17. A method to identify the location and orientation of an article, the method comprising the steps of:

obtaining an image of the article with the article having a known orientation and location and distance from a camera; characterised by
creating template X- and Y- edge matrices from the image of the article;
creating a plurality of sets of modified template edge matrices, each of the sets of modified template edge matrices comprising a template X- and Y- edge vector matrix with the article in a different orientation;
capturing a digital visual image containing the article the digital image being a matrix of pixels;
creating article X- and Y- edge matrices from the matrix of pixels;
smoothing the modified template edge matrices and the article edge matrices by averaging adjacent pixels and subsampling to obtain reduced matrices with a reduced number of pixels;
quantifying the difference between each of the reduced modified template edge matrices and the reduced article edge matrices with the reduced modified template edge matrices placed at a plurality of locations within the bounds of the article edge matrices; and
quantifying the difference between each of the sets of modified template edge matrices and the article matrices with the modified template edge matrices placed at a plurality of locations within the bounds of the article edge matrices only for locations within a predetermined distance of the location and the orientation having minimum differences between the reduced matrices; and
identifying the location and orientation of the article as the orientation of the article represented by the set of modified template edge matrices at the location within the bounds of the article X- and Y- edge matrices with the minimal quantified differences between the modified template edge matrices and the article X- and Y- edge matrices
wherein portions of the template edge matrices outside of outlines of the article are ignored when quantifying the difference between each of the modified template edge matrices and the article edge matrices.

18. The method of Claim 17 wherein the plurality of locations for which the difference between each of the reduced modified template edge matrices and the reduced article edge matrices are quantified include every contiguous set of pixels within which the reduced modified template edge matrices will fit.

**Patentansprüche**

1. Verfahren zum Feststellen des Ortes und der Ausrichtung eines Gegenstandes, mit den Schritten:
   Erhalten einer Abbildung des Gegenstandes bei einer bekannten Ausrichtung und einem bekannten Ort des Gegenstandes bezüglich einer Kamera,
   gekennzeichnet durch

   - Erzeugen von Muster-X- und -Y-Rand-Matrizen ausgehend von der Abbildung des Gegenstandes,
   - Erzeugen einer Vielzahl Sätze modifizierter Musterrand-Matrizen, wobei jeder der Sätze modifizierter Muster-Matrizen Muster-X- und -Y-Rand-Matrizen bei einer verschiedenen Ausrichtung des Gegenstandes umfaßt,
   - Erfassen einer den Gegenstand enthaltenden digitalen sichtbaren Abbildung, wobei die digitale Abbildung eine Pixelmatrix ist,
   - quantitatives Bestimmen der Differenz zwischen jedem der Sätze modifizierter Musterrand-Matrizen und den Gegenstand-X- und -Y-Rand-Matrizen, bei einer Anordnung der modifizierten Musterrand-Matrizen an einer Vielzahl Orte innerhalb der Begrenzungen der Gegenstandrand-Matrizen, und
   - Feststellen des Ortes und der Ausrichtung des Gegenstandes als die Ausrichtung des Gegenstandes, die durch den Satz modifizierter Musterrand-Matrizen an dem Ort innerhalb der Begrenzungen der Gegenstand-X- und -Y-Rand Matrizen dargestellt ist, bei dem die kleinstmöglichen quantitativ bestimmten Differenzen zwischen den modifizierten Musterrand-Matrizen und den Gegenstand-X- und -Y-Rand-Matrizen bestehen.

2. Verfahren nach Anspruch 1, ferner mit den Schritten:

   - Glätten der modifizierten Musterrand-Matrizen und der Gegenstandrand-Matrizen durch Mitteln benachbarter Pixel und Subsampling, um reduzierte Matrizen mit verkleinerter Pixelanzahl zu erhalten,
   - quantitatives Bestimmen der Differenz zwischen jeder der reduzierten modifizierten Musterrand-Matrizen und den reduzierten Gegenstandrand-Matrizen bei Anordnung der modifizierten Musterrand-Matrizen an einer Vielzahl Orte innerhalb der Begrenzungen der Gegenstandrand-Matrizen, und
   - quantitatives Bestimmen der Differenz zwischen jedem der Sätze modifizierter Musterrand-Matrizen und den Gegenstand-X- und Y-Rand-Matrizen bei Anordnung der modifizierten Musterrand-Matrizen an einer Vielzahl Orte innerhalb der Begrenzungen der Gegenstandrand-Matrizen, nur für Orte innerhalb eines vorbestimmten Abstandes von dem Ort und der Ausrichtung, für die zwischen den reduzierten Matrizen kleinstmögliche Differenzen bestehen.

3. Verfahren nach Anspruch 1,
   bei dem die Rand-Matrizen durch Anwenden der Operatoren

$$\frac{1}{8}\begin{bmatrix} 1 & 2 & 1 \\ 0 & 0 & 0 \\ -1 & -2 & -1 \end{bmatrix}$$

und

$$\frac{1}{8}\begin{bmatrix} 1 & 0 & -1 \\ 2 & 0 & -2 \\ 1 & 0 & -1 \end{bmatrix}$$

auf die Abbildung erhalten werden, um waagerechte bzw. vertikale Rand-Matrizen zu erhalten.

**4.** Verfahren nach Anspruch 1,
bei dem eine Vielzahl modifizierter Musterrand-Matrizen bei Skalierung der Musterrand-Matrix zur Darstellung verschiedener Abstände von der Kamera erzeugt wird.

**5.** Verfahren nach Anspruch 1,
bei dem eine Vielzahl modifizierter Musterrand-Matrizen bei Umwandlung der Musterrand-Matrix zur Darstellung von zur Normalen zur optischen Achse verschiedenen Winkeln erzeugt wird.

**6.** Verfahren nach Anspruch 1,
bei dem Abschnitte der Musterrand-Matrizen außerhalb der Umrisse des Gegenstandes beim quantitativen Bestimmen der Differenz zwischen jeder der modifizierten Musterrand-Matrizen und den Gegenstandrand-Matrizen ignoriert werden.

**7.** Verfahren nach Anspruch 1,
bei dem die Vielzahl Orte jeder beliebige zusammenhängende Satz Pixel innerhalb der Gegenstandrand-Matrizen ist, in den eine modifizierte Musterrand-Matrix paßt.

**8.** Verfahren nach Anspruch 2,
bei dem die Vielzahl Orte, für welche die Differenz zwischen jeder der reduzierten modifizierten Musterrand-Matrizen und den reduzierten Gegenstandrand-Matrizen quantitativ bestimmt wird, jeden beliebigen zusammenhängenden Satz Pixel umfaßt, in den die reduzierten modifizierten Musterrand-Matrizen passen.

**9.** Verfahren nach Anspruch 1,
bei dem eine farbige Abbildung erhalten wird und einfarbige Rand-Matrizen für mehr als eine Farbe erzeugt und dann kombiniert werden, um die Musterrand-Matrizen zu erhalten.

**10.** Verfahren nach Anspruch 9,
bei dem drei Satz einfarbige Rand-Matrizen erzeugt werden.

**11.** Verfahren nach Anspruch 2,
bei dem Rand-Matrizen erhalten werden durch Anwenden der Operatoren

$$\frac{1}{8}\begin{bmatrix} 1 & 2 & 1 \\ 0 & 0 & 0 \\ -1 & -2 & -1 \end{bmatrix}$$

und

$$\frac{1}{8}\begin{bmatrix} 1 & 0 & -1 \\ 2 & 0 & -2 \\ 1 & 0 & -1 \end{bmatrix}$$

auf die Abbildung, um vertikale bzw. waagerechte Rand-Matrizen zu erhalten.

**12.** Verfahren nach Anspruch 11,
bei dem Abschnitte der Musterrand-Matrizen außerhalb der Umrisse des Gegenstandes beim quantitativen Bestimmen der Differenz zwischen jeder der modifizierten Musterrand-Matrizen und den Gegenstandrand-Matrizen ignoriert werden.

**13.** Verfahren nach Anspruch 12,
bei dem die Vielzahl Orte jeden beliebigen zusammenhängenden Satz Pixel innerhalb der Pixel-Matrix umfaßt, in den eine modifizierte Musterrand-Matrix paßt.

14. Verfahren nach Anspruch 12,
bei dem die Vielzahl Orte, für welche die Differenz zwischen jeder der reduzierten modifizierten Musterrand-Matrizen und den reduzierten Gegenstandrand-Matrizen quantitativ bestimmt wird, jeden beliebigen zusammenhängenden Satz Pixel umfaßt, in den die reduzierten modifizierten Musterrand-Matrizen passen.

15. Verfahren nach Anspruch 14,
bei dem eine farbige Abbildung erhalten wird und einfarbige Rand-Matrizen für mehr als eine Farbe erzeugt und dann kombiniert werden, um die Musterrand-Matrix zu erhalten.

16. Verfahren nach Anspruch 15,
bei dem drei Satz einfarbige Rand-Matrizen erzeugt und dann kombiniert werden, um die Musterrand-Matrix zu erhalten.

17. Verfahren zum Feststellen des Ortes und der Ausrichtung eines Gegenstandes, mit den Schritten:

- Erhalten einer Abbildung des Gegenstandes bei einer bekannten Ausrichtung und einem bekannten Ort bezüglich und einen bekannten Abstand des Gegenstandes von einer Kamera,

gekennzeichnet durch

- Erzeugen von Muster-X- und -Y-Rand-Matrizen ausgehend von der Abbildung des Gegenstandes,
- Erzeugen einer Vielzahl Sätze modifizierter Musterrand-Matrizen, wobei jeder der Sätze modifizierter Musterrand-Matrizen eine Muster-X- und -Y-Rand-Vektor-Matrix bei einer verschiedenen Anordnung des Gegenstandes umfaßt,
- Erfassen einer den Gegenstand enthaltenden digitalen sichtbaren Abbildung, wobei die digitale Abbildung eine Pixelmatrix ist,
- Erzeugen von Gegenstand-X- und -Y-Rand-Matrizen ausgehend von der Pixelmatrix,
- Glätten der modifizierten Musterrand-Matrizen und der Gegenstandrand-Matrizen durch Mitteln benachbarter Pixel und Subsampling, um reduzierte Matrizen mit verkleinerter Pixelanzahl zu erhalten,
- quantitatives Bestimmen der Differenz zwischen jeder der reduzierten modifizierten Musterrand-Matrizen und den reduzierten Gegenstandrand-Matrizen bei Anordnung der reduzierten modifizierten Musterrand-Matrizen an einer Vielzahl Orte innerhalb der Begrenzungen der Gegenstandrand-Matrizen, und
- quantitatives Bestimmen der Differenz zwischen jedem der Sätze modifizierter Musterrand-Matrizen und den Gegenstand-Matrizen bei Anordnung der modifizierten Musterrand-Matrizen an einer Vielzahl Orte innerhalb der Begrenzungen der Gegenstandrand-Matrizen, nur für Orte innerhalb eines vorbestimmten Abstandes von dem Ort und der Ausrichtung, für die zwischen den reduzierten Matrizen kleinstmögliche Differenzen bestehen, und
- Feststellen des Ortes und der Ausrichtung des Gegenstandes als die Ausrichtung des Gegenstandes, die durch den Satz modifizierter Musterrand-Matrizen an dem Ort innerhalb der Begrenzungen der Gegestand-X- und -Y-Rand-Matrizen dargestellt sind, bei dem die kleinstmöglichen quantitativ bestimmten Differenzen zwischen den modifizierten Musterrand-Matrizen und den Gegenstand-X- und -Y-Rand-Matrizen bestehen,
- wobei Abschnitte der Musterrand-Matrizen außerhalb der Umrisse des Gegenstandes beim quantitativen Bestimmen der Differenz zwischen jeder der modifizierten Musterrand-Matrizen und den Gegenstandrand-Matrizen ignoriert werden.

18. Verfahren nach Anspruch 17,
bei dem die Vielzahl Orte, für welche die Differenz zwischen jeder der reduzierten modifizierten Musterrand-Matrizen und den reduzierten Gegenstandrand-Matrizen quantitativ bestimmt wird, jeden beliebigen zusammenhängenden Satz Pixel umfaßt, in den die reduzierten modifizierten Musterrand-Matrizen passen.

**Revendications**

1. Procédé d'identification de l'emplacement et l'orientation d'un objet, le procédé comportant les étapes consistant :

à obtenir une image de l'objet, l'objet ayant une orientation et un emplacement connus par rapport à une caméra ; caractérisé par :

la création de matrices de bords X et Y formant modèle à partir de l'image de l'objet ;

la création d'une pluralité d'ensembles de matrices de bords formant modèle modifiées, chacun des ensembles de matrices formant modèle modifiées comportant des matrices de bords X et Y formant modèle, pour lesquelles l'objet est placé suivant une orientation différente ;

la saisie d'une image visuelle numérique contenant l'objet, l'image numérique constituant une matrice de pixels ;

la quantification de la différence entre chacun des ensembles de matrices de bords formant modèle modifiées et les matrices de bords X et Y de l'objet, les matrices de bords formant modèle modifiées étant placées en une pluralité d'emplacements situés dans les limites des matrices de bords de l'objet ; et

l'identification de l'emplacement et de l'orientation de l'objet en tant qu'orientation de l'objet représentée par l'ensemble de matrices de bords formant modèle modifiées en l'emplacement situé dans les limites des matrices de bords X et Y de l'objet avec les différences quantifiées minimes entre les matrices de bords formant modèle modifiées et les matrices de bords X et Y de l'objet.

2. Procédé selon la revendication 1, comportant, en outre, les étapes consistant :

à lisser les matrices de bords formant modèle modifiées et les matrices de bords de l'objet par le moyennage de pixels adjacents et par le sous-échantillonnage afin d'obtenir des matrices réduites présentant un nombre réduit de pixels ;

à quantifier la différence entre chacune des matrices de bords formant modèle modifiées, réduites et les matrices de bords de l'objet réduites, les matrices de bords formant modèle modifiées étant placées en une pluralité d'emplacements situés dans les limites des matrices de bord de l'objet ; et

à quantifier la différence entre chacun des ensembles de matrices de bords formant modèle modifiées et les matrices de bords X et Y de l'objet, les matrices de bords formant modèle modifiées étant placées en une pluralité d'emplacements situés dans les limites des matrices de bords de l'objet uniquement dans le cas d'emplacements se trouvant à moins qu'une distance prédéterminée de l'emplacement et de l'orientation présentant des différences minimales entre les matrices réduites.

3. Procédé selon la revendication 1 dans lequel les matrices de bords sont obtenues an appliquant à l'image pour obtenir des matrices de bords horizontaux et verticaux, respectivement, les opérateurs :

$$\frac{1}{8}\begin{bmatrix} 1 & 2 & 1 \\ 0 & 0 & 0 \\ -1 & -2 & -1 \end{bmatrix}$$

et

$$\frac{1}{8}\begin{bmatrix} 1 & 0 & -1 \\ 2 & 0 & -2 \\ 1 & 0 & -1 \end{bmatrix}$$

4. Procédé selon la revendication 1, dans lequel une pluralité de matrices de bords formant modèle modifiées sont créées, l'échelle de la matrice de bords formant modèle étant établie afin de représenter différentes distances par rapport à la caméra.

5. Procédé selon la revendication 1, dans lequel une pluralité de matrices de bords formant modèle modifiées sont créées, la matrice de bord de modèle étant transformée pour représenter différents angles par rapport à la normale à l'axe optique.

6. Procédé selon la revendication 1, dans lequel des parties des matrices de bords formant modèle situées à l'extérieur des contours de l'objet sont ignorées lors de la quantification de la différence entre chacune des matrices de bords formant modèle modifiées et les matrices de bords de l'objet.

7. Procédé selon la revendication 1, dans lequel la pluralité d'emplacements est constitué de chaque ensemble contigu de pixels situé à l'intérieur des matrices de bords de l'objet dans lequel peut s'inscrire une matrice de bords formant modèle modifiée.

8. Procédé selon la revendication 2, dans lequel la pluralité d'emplacements pour lesquels la différence entre chacune des matrices de bords formant modèle modifiées, réduites et les matrices de bords de l'objet réduites est quantifiée comprend chaque ensemble contigu de pixels dans lequel les matrices de bords formant modèle modifiées, réduites peuvent s'inscrire.

9. Procédé selon la revendication 1, dans lequel une image couleur est obtenue, et des matrices de bords à une seule couleur sont créées pour plus d'une couleur, puis sont combinées pour permettre l'obtention des matrices de bords formant modèle.

10. Procédé selon la revendication 9, dans lequel trois ensembles de matrices de bords à une seule couleur sont créés.

11. Procédé selon la revendication 2, dans lequel des matrices de bords sont obtenues en appliquant à l'image pour obtenir des matrices de bords horizontaux et verticaux, respectivement, les opérateurs :

$$\frac{1}{8}\begin{bmatrix} 1 & 2 & 1 \\ 0 & 0 & 0 \\ -1 & -2 & -1 \end{bmatrix}$$

et

$$\frac{1}{8}\begin{bmatrix} 1 & 0 & -1 \\ 2 & 0 & -2 \\ 1 & 0 & -1 \end{bmatrix}$$

12. Procédé selon la revendication 11, dans lequel des parties des matrices de bords formant modèle situées à l'extérieur des contours de l'objet sont ignorées lors de la quantification de la différence entre chacune des matrices de bords formant modèle modifiées et les matrices de bords de l'objet.

13. Procédé selon la revendication 12, dans lequel la pluralité d'emplacements est constitué de chaque ensemble contigu de pixels situé à l'intérieur de la matrice de pixels dans lequel peut s'inscrire une matrice de bords formant modèle modifiée.

14. Procédé selon la revendication 12, dans lequel la pluralité d'emplacements pour lesquels la différence entre chacune des matrices de bords formant modèle modifiées, réduites et les matrices de bords de l'objet réduites est quantifiée comprend chaque ensemble contigu de pixels dans lequel les matrices de bords formant modèle modifiées, réduites peuvent s'inscrire.

15. Procédé selon la revendication 14, dans lequel une image couleur est obtenue, et des matrices de bords à une seule couleur sont créées pour plus d'une couleur, puis sont combinées pour permettre l'obtention des matrices de bords formant modèle.

16. Procédé selon la revendication 15, dans lequel trois ensembles de matrices de bords à une seule couleur sont créés, puis sont combinés pour permettre l'obtention de la matrice de bords formant modèle.

17. Procédé d'identification de l'emplacement et l'orientation d'un objet, le procédé comportant les étapes consistant :

à obtenir une image de l'objet, l'objet ayant une orientation, un emplacement et une distance connus par rapport à une caméra ; caractérisé par :

la création de matrices de bords X et Y formant modèle à partir de l'image de l'objet ;

la création d'une pluralité d'ensembles de matrices de bords formant modèle modifiées, chacun des ensembles de matrices de bords formant modèle modifiées comportant une matrice vectorielle de bords X et Y formant modèle, pour laquelle l'objet est placé suivant une orientation différente ;

la saisie d'une image visuelle numérique contenant l'objet, l'image numérique constituant une matrice de pixels ;

la création de matrices de bords X et Y de l'objet à partir de la matrice de pixels ;

le lissage des matrices de bords formant modèle modifiées et des matrices de bords de l'objet par le moyennage de pixels adjacents et par le sous-échantillonnage afin d'obtenir des matrices réduites présentant un nombre réduit de pixels ;

la quantification de la différence entre chacune des matrices de bords formant modèle modifiées, réduites et les matrices de bords de l'objet réduites, les matrices de bords formant modèle modifiées, réduites étant placées en une pluralité d'emplacements situés dans les limites des matrices de bord de l'objet ; et

la quantification de la différence entre chacun des ensembles de matrices de bords formant modèle modifiées et les matrices de l'objet, les matrices de bords formant modèle modifiées étant placées en une pluralité d'emplacements situés dans les limites des matrices de bords de l'objet uniquement dans le cas d'emplacements se trouvant à moins qu'une distance prédéterminée de l'emplacement et de l'orientation présentant des différences minimales entre les matrices réduites ; et

l'identification de l'emplacement et de l'orientation de l'objet en tant qu'orientation de l'objet représentée par l'ensemble de matrices de bords formant modèle modifiées en l'emplacement situé dans les limites des matrices de bords X et Y de l'objet avec les différences quantifiées minimes entre les matrices de bords formant modèle modifiées et les matrices de bords X et Y de l'objet, des parties des matrices de bords formant modèle situées à l'extérieur des contours de l'objet étant ignorées lors de la quantification de la différence entre chacune des matrices de bords formant modèle modifiées et les matrices de bords de l'objet.

18. Procédé selon la revendication 17, dans lequel la pluralité d'emplacements pour lesquels la différence entre chacune des matrices de bords formant modèle modifiées, réduites et les matrices de bords de l'objet réduites est quantifiée comprend chaque ensemble contigu de pixels dans lequel les matrices de bords formant modèle modifiées, réduites peuvent s'inscrire.